# EUROPÄISCHE PATENTANMELDUNG

(11) **EP 2 218 662 A2**
(43) Veröffentlichungstag der Anmeldung: **18.08.2010**
(21) Anmeldenummer: 10000649.3
(22) Anmeldetag: 22.01.2010
(51) Int. Cl.: B65G 25/02

(54) **Hubbalkenförderer**

(30) Priorität: 14.02.2009 DE 102009009097
(71) Anmelder: SIEMAG GmbH, 57250 Netphen (DE)
(72) Erfinder: Hofmann, Karl Robert, 57250 Netphen (DE); Büdenbender, Bernd, 57250 Netphen (DE)
(74) Vertreter: Grosse, Wolf-Dietrich Rüdiger

(57) **Zusammenfassung**

Die Erfindung betrifft einen Hubbalkenförderer zum taktweisen Transport von Bandbunden bzw. Blechbunden, Blechpaketen oder dergleichen Transportgut (2), umfassend einen mittels Hubvorrichtungen (7;9) heb- und senkbaren sowie mittels zumindest eines Fahrantriebes in Transportrichtung schienengeführt verfahrbaren, zwei Radsätze bzw. Fahrschemel (3,4) aufweisenden Hubbalken (12a), wobei der Hubbalken mit einem folgenden Hubbalkenförderer gekoppelt ist. Der Hubbalken (12a) ist gelenkig mit einem lediglich einen Fahrschemel (15) aufweisenden Transportelement (14a) verbunden, wobei das Gelenk (13) als Kopplungsglied sowohl die Vertikal- und Horizontalkräfte als auch die Horizontalbewegung des Hubbalkens (12a) auf das Transportelement (14a) überträgt.

## Beschreibung

Die Erfindung betrifft einen Hubbalkenförderer zum taktweisen Transport von Band- bzw. Blechbunden, Blechpaketen oder dergleichen Transportgut, umfassend einen mittels Hubvorrichtungen heb- und senkbaren sowie mittels zumindest eines Fahrantriebes in Transportrichtung schienengeführt verfahrbaren, zwei Radsätze bzw. Fahrschemel aufweisenden Hubbalken, wobei der Hubbalken mit einem folgenden Hubbalkenförderer gekuppelt ist.

Ein solcher Hubbalkenförderer weist mehrere in Transportrichtung hintereinander angeordnete und miteinander gekoppelte Hubbalken desselben Förderertyps auf, wie durch die DE 601 10 678 T2 bekannt geworden, welche über ihren Fahrantrieb taktweise gemeinsam vor- und zurückbewegt werden. Die einzelnen Förderer sind durch jeweils eine Verbindungsstange miteinander gekuppelt. Dabei sind der oder die Hubbalken mittels ihrer Hubvorrichtungen heb- und senkbar, so dass die auf seitlichen Auflagerflächen aufliegenden, üblich auch als Coils bezeichneten Blechbunde oder dergleichen taktweise entlang der Transportrichtung bewegt bzw. schrittweise verschoben werden können.

Bei einem aus der DE 12 94 281 C2 bekannten Hubbalkenförderer sind mehrere hintereinander angeordnete Hubbalken vorgesehen, wobei aufeinanderfolgende Hubbalken über nur die Fahrbewegung übertragenden, ansonsten ein voneinander unabhängiges und wahlweise Heben oder Senken erlaubenden Kupplungen miteinander verbunden sind. Die jedem Hubbalken zugeordneten Hubvorrichtungen sind auf einem Fahrschemel angeordnet, der über Laufrollen auf einer Schienenanordnung in Transport- bzw. Längsrichtung bewegt wird. Je Hubbalken sind mindestens zwei Fahrschemel, die zwei Fahrachsen aufweisen, vorgesehen.

Da jeder einzelne Hubbalken für eine bestimmte Anzahl von Coils mit einer bestimmten Geometrie und damit für ein festgelegtes Maximalgewicht ausgelegt ist, werden bei den bekannten Hubbalkenförderern bei Erhöhung der Anzahl der Coils bzw. beim Transportieren von im Durchmesser größeren und schwereren Coils mehrere dieser Hubbalken miteinander gekoppelt. Über das Anhängen bzw. das Ankoppeln werden die Hubbalken mit ihren Fahrwerken gemeinsam auf den Schienensträngen in Transportrichtung bewegt, sind, dabei aber unabhängig voneinander heb- und senkbar. Die Kopplung mehrerer, komplett eigenständiger Hubbalken zum taktweisen Transport einer erhöhten Gesamtlast ist hierbei unabdingbar, da die einzelnen Komponenten eines Hubbalkens dergestalt aufeinander abgestimmt sind, dass eine Erhöhung der Coilanzahl bzw. eine Gewichtszunahme der einzelnen Coils zu einer völligen Überarbeitung bzw. Anpassung der einzelnen Hubbalken führen würde.

Ein wesentliches Bauteil des Hubbalkens ist hierbei das Fahrwerk. Pro Hubbalken werden meist zwei Fahrantriebe bzw. Fahrschemel mit jeweils zwei Achsen einschließlich der Räder installiert. Die Fahrschemel sind dabei für eine bestimmte maximale Achslast ausgelegt, die idealerweise ausgenutzt wird, aber nicht überschritten werden darf. Eine Erhöhung der Achslast durch zusätzliche Coils bzw. schwerere Coils würde neben einer neuen Konstruktion des Fahrwerks auch eine Änderung der Schienenanlagen für die Laufräder erfordern.

Der Erfindung liegt die Aufgabe zugrunde, einen Hubbalkenförderer der eingangs beschriebenen Art zu schaffen, der sich zum Transport einer höheren Anzahl von Blechbunden einfach und kostengünstig variabel erweitern lässt.

Diese Aufgabe wird erfindungsgemäß dadurch gelöst, dass der Hubbalken gelenkig mit einem lediglich einen Fahrschemel aufweisenden Transportelement verbunden ist, wobei das Gelenk als Kopplungsglied sowohl die Vertikal- und Horizontalkräfte als auch die Horizontalbewegung des Hubbalkens auf das Transportelement überträgt. Das Transportelement übernimmt hierbei die Funktion eines zweiten Hubbalkens zum taktweisen Transport von zusätzlich zum Basishubbalken zu transportierenden Blechbunden bzw. Coils. Allerdings vollzieht das Transportelement im Gegensatz zu einem zweiten, eigenständigen Hubbalken keine unabhängigen Bewegungsabläufe, sondern ist mit den Bewegungsabläufen des Basishubbalkens synchronisiert.

Zum Transport der Coils können hierbei in ihren Abmessungen und ihrer Tragfähigkeit unterschiedlich, modular und variabel an die Transportaufgaben angepaßt konstruierte Transportelemente zum Einsatz kommen, so dass insbesondere unter Last- und Kostenaspekten jederzeit eine optimale Kombination von Basishubbalken und aufliegendem Transportelement in Abhängigkeit von Coilanzahl und dem entsprechenden Coilgewicht möglich ist. Die vorhandenen bzw. bestehenden Hubbalken-Fördereranlagen brauchen in keiner Weise verändert bzw. umgebaut zu werden, insbesondere wird ein weiterer kompletter Hubbalken mit zwei Fahrschemeln entbehrlich. Durch die Ankopplung des Transportelements über ein Gelenk bzw. Gelenklager ist das System trotz der insgesamt drei Fahrschemel bzw. Radsätze statisch bestimmt.

Eine bevorzugte Ausgestaltung der Erfindung sieht vor, dass das Transportelement als Nachläufer mit einer Hubvorrichtung ausgebildet ist. Dies bedeutet, dass der Nachläufer keinen eigenen Antrieb zur horizontalen Transportbewegung besitzt und gemeinsam mit dem Basishubbalken, an den beispielsweise ein Horizonalzylinder angreift, bewegt wird. Im Gegensatz zu dem Basishubbalken wäre das Nachläufer-Transportelement allein genommen statisch unbestimmt. Durch die gelenkige Verbindung des Nachläufers bzw. Transportelementes mit dem Basishubbalken, vorzugsweise mittels eines sowohl horizontale als auch vertikale Kräfte übertragenden Gelenklagers, erreicht der Nachläufer trotz des nur einen Fahrschemels seine statische Bestimmtheit. Ein verlängerter Basishubbalken mit bspw. drei Fahrschemeln wäre hingegen statisch unbestimmt. Die Hubvorrichtung des Nachläufers kann beispielsweise als Kolben-/Zylindereinheit oder als Exzenter-Hubwerk ausgebildet sein und mit den Heb- und Senkbewegungen des Basishubbalkens synchronisiert werden. Bei beispielsweise einem Exzenter-Hubwerk, die bzw. das in den Fahrschemeln ausgebildet sind bzw. ist, und zwar als die Lagerung der Laufräder beinhaltendes Exzenterrad, durch eine Koppelstange, die die Exzenterräder miteinander verbindet. Zum Vertikalhub ist hierbei ein Hubzylinder einerseits an einer aussermittigen Position eines Exzenterrades und andererseits am Basishubbalken bzw. am Balken des Nachläufers angelenkt.

Die Kombination von Hubbalkenförderer und Transportelement mit einem einzigen Radsatz bzw. Fahrschemel und gelenkiger Anbindung des dadurch statisch ebenfalls bestimmten Nachläufers erfordert kein kostenintensives, zweites Fahrwerk - wie es bei einem kompletten Hubbalken der Fall wäre - und keine sonstigen Umbaumaßnahmen an der Förderanlage.

Weitere Merkmale und Einzelheiten der Erfindung ergeben sich aus den Ansprüchen und der nachfolgenden Beschreibung von in den Zeichnungen mit Blechbunden als Transportgut schematisch dargestellten Ausführungsbeispielen der Erfindung. Es zeigen:
- Fig. 1: einen fünf Blechbunde transportierenden, herkömmlichen Hubbalkenförderer, in der Seitenansicht dargestellt;
- Fig. 2: in einer Seitenansicht einen Hubbalkenförderer mit einem daran gelenkig angekoppelten, ergänzenden Transportelement bzw. Nachläufer, wobei der Hubbalkenförderer drei und der Nachläufer zwei Blechbunde transportiert;
- Fig. 3: in einer Seitenansicht einen Hubbalkenförderer mit einem daran gelenkig angekoppelten, ergänzenden Transportelement bzw. Nachläufer, wobei der Hubbalkenförderer vier und der Nachläufer zwei Blechbunde transportiert; und
- Fig. 4: in einer Seitenansicht einen Hubbalkenförderer mit einem daran gelenkig angekoppelten, ergänzenden Transportelement bzw. Nachläufer, wobei der Hubbalkenförderer drei und der Nachläufer ebenfalls drei Blechbunde transportiert.

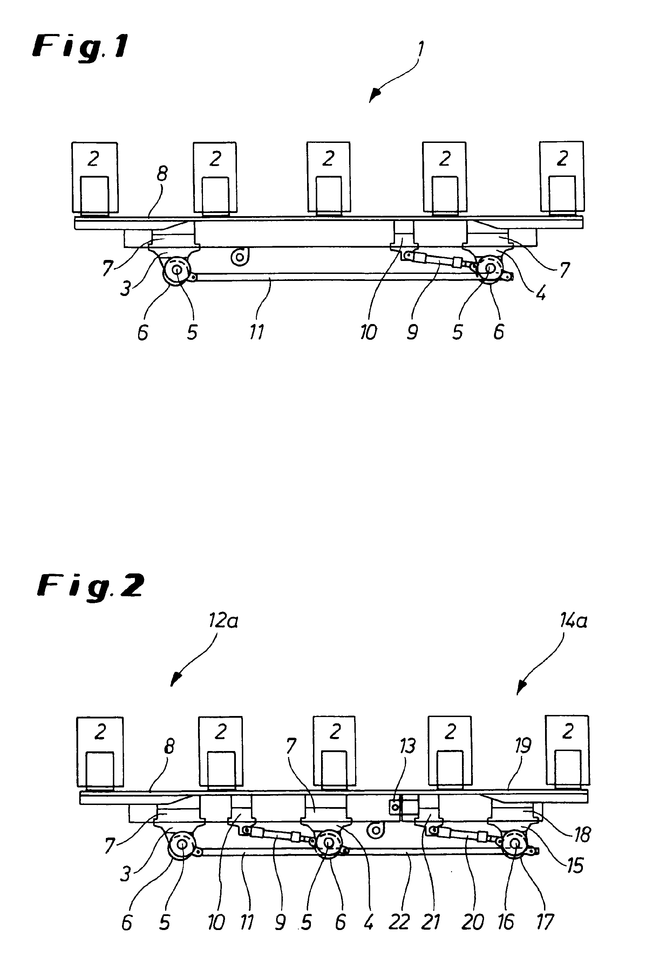

In der Fig. 1 ist ein üblicher Hubbalken 1 einer Förderstrasse für den taktweisen Transport von - hier - fünf Blechbunden bzw. Coils 2 dargestellt.

Bei dem Hubbalken 1 handelt es sich um einen Stetigförderer, der durch Überlagerung von Vertikal- und Horizontalbewegung die Coils 2 in fest definierten Abständen jeweils um eine Position weiter bewegt.

Das Fahrwerk des Hubbalkens 1 besteht aus zwei Fahrschemeln 3, 4, die jeweils mit einer Achse 5 und daran angebundenen Laufrädern 6 bestückt sind. Die Laufräder 6 werden bei der Horizontalbewegung bzw. Transportbewegung des Hubbalkens 1 auf hier nicht dargestellten Führungsschienen einer Schienenanlage innerhalb der Fördereinrichtung geführt.

Auf den beiden Fahrschemeln 3, 4 ist entweder jeweils eine Hubvorrichtung 7 zum Heben- und Senken des die Coils 2 tragenden Balkens 8 angeordnet oder stattdessen und somit optional, wobei in den Ausführungsbeispielen beide Varianten gleichzeitig nebeneinander angedeutet sind, kann die Vertikalbewegung durch in den Fahrschemeln 3, 4 ausgebildete Exzenter-Hubwerke bewirkt weren. Hierzu weist der Fahrschemel 4 einen Hubzylinder 9 auf, der einerseits aussermittig an einem Exzenterrrad, das die Lagerung des jeweiligen Laufrades 6 beinhaltet, und andererseits an einem Auflager 10 des Balkens 8 angelenkt ist. Die Exzenterräder sind über ein Gestänge 11 bewegungsabhängig miteinander gekoppelt. Mit dem Ausfahren des Hubzylinders 9 wird eine Drehbewegung des Exzenterrades ausgelöst, die durch die exzentrische Laufradlagerung gleichzeitig zu einer Vertikalbewegung führt. Der hier nicht dargestellte, horizontale Fahrantrieb des Hubbalkens 1 erfolgt beispielsweise durch bekannte Zylinder- oder Motorenantriebe. Durch taktweises Vor- und Zurückfahren sowie entsprechendes Anheben und Absenken des Hubbalkens 1 lassen sich die auf dem Balken 8 aufliegenden Coils 2 tatktweise in die gewünschte Förderrichtung transportieren.

In Fig. 2 ist ein Hubbalken 12a gleicher Bauart wie zuvor für den Hubbalken 1 beschrieben dargestellt. An den Hubbalken 12a ist mittels eines als Gelenklager ausgebildeten Gelenks 13 ein Nachläufer bzw. Transportelement 14a angeschlossen. Der Nachläufer 14a benötigt an seinem vom Gelenklager 13 entfernten Ende lediglich einen Fahrschemel bzw. Radsatz 15, d.h. eine Achse 16 mit daran angebundenen Laufrädern 17. Oberhalb des Fahrschemels 15 kann eine Hubvorrichtung 18 zum Heben und Senken eines ein Coil 2 tragenden Balkens 19 angeordnet sein. Auch hier ist wiederum gezeigt, dass optional ein Exzenter-Hubwerk vorgesehen werden kann, wie zuvor für Fig. 1 schon erläutert, wozu am Fahrschemel 15 ein Hubzylinder 20 angeordnet ist, der über ein Auflager 21 die Heb- und Senkbewegung des Balkens 19 bewirkt.

Das Exzenterrad des Hubwerkes des Nachläufers 14 a ist über eine Schub- und Zugstange 22 mit dem Gestänge 11 des Hubbalkens 12a bewegungsabhängig gekoppelt. Dies bedeutet, dass der Nachläufer 14a keine von dem Hubbalken 12a unabhängigen Heb- und Senkbewegungen vollzieht, sondern exakt die gleichen, synchronen Bewegungsabläufe wie der Hubbalken 12a durchführt.

Der Vorteil des über das Gelenklager 13 mit dem Hubbalken 12a gelenkig gekoppelten Nachläufers 14a ist, dass er im Gegensatz zu einem kompletten, eigenständigen Hubbalken 1 bzw. 12a - wenn ein solcher als zweiter Hubbalken aufgrund der Belastungssituation erforderlich wäre - mit nur einem Fahrschemel 15 bzw. einer Achse16 auskommt Durch die gelenkige Verbindung mit dem Hubbalken 12a erreicht der Nachläufer 14a die statische Bestimmtheit, wie sie der auf zwei Fahrschemeln 3, 4 geführte Hubbalken 12a ohnehin ebenfalls besitzt.

Wie der Fig. 2 zu entnehmen ist, wurden zur besseren Gewichtsverteilung der gegenüber Fig. 1 schwereren Coils 2 die in Fig. 1 von einem Hubbalken 1 zu transportierenden fünf Coils 2 bei dem Hubbalken 12a mit dem Nachläufer 14a im Verhältnis drei (Hubbalken 12a) zu zwei (Nachläufer 14a) aufgeteilt.

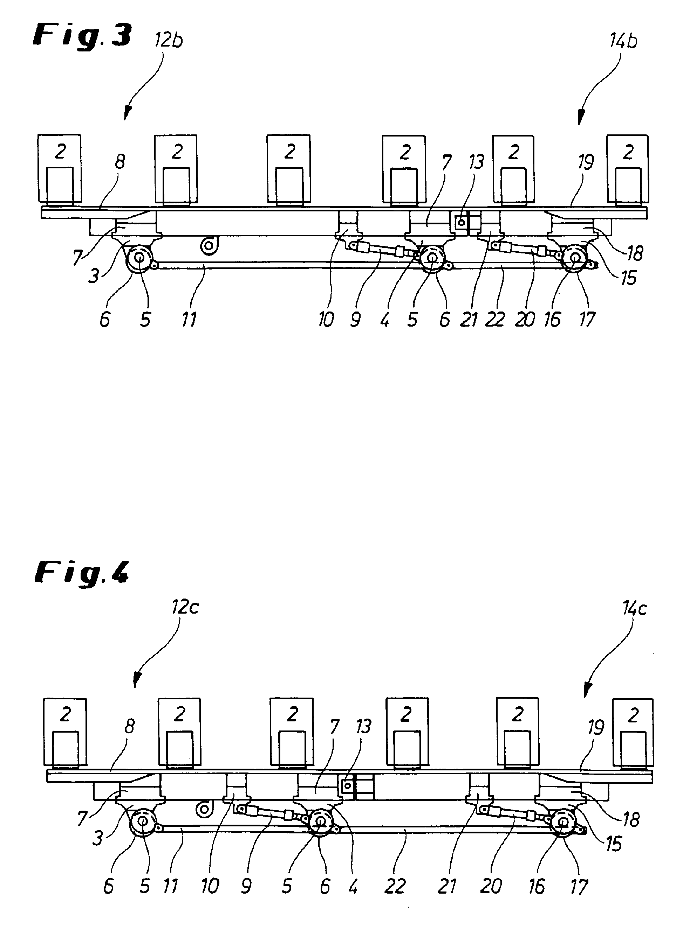

In dem Ausführungsbeispiel gemäß Fig. 3 ist ein Hubbalken 12b mit vier und ein Nachläufer 14b mit zwei Coils 2 beladen. Der Hubbalken 12b weist hierbei gegenüber dem Nachläufer 14b eine größere Baulänge auf. Bei dem Hubbalken 12b ist durch die Beladung mit vier Coils 2 seine maximale Aufnahmekapazität, sowohl hinsichtlich der Coilanzahl als auch der Coilgewichte, erreicht. In diesem Fall ist zum taktweisen Transport von zusätzlichen Coils 2 ein Nachläufer 14b gelenkig angekoppelt, der für die Beförderung von zwei Coils 2 ausgelegt ist.

Bei dem in Fig. 4 dargestellten Hubbalken 12c mit Nachläufer 14c weist der Hubbalken 12c gegenüber dem Nachläufer 14c eine geringere Baulänge auf. Die konstruktionsbedingte Aufnahmekapazität des Hubbalkens 12c ist hier durch die Beladung mit drei Coils 2 erreicht, so dass zum Transport von drei weiteren Coils 2 der gelenkig angekoppelte Nachläufer 14c eine entsprechende Baulänge aufweist und sowohl fahrwerkseitig als auch hubtechnisch für eine höhere Lastaufnahme ausgelegt ist.

Wie die beispielhaften Ausführungen gemäß den Fig. 2 bis 4 zeigen, wird durch die gelenkige Ankopplung von beliebigen, verschieden langen und/oder für unterschiedlich hohe Lastaufnahmen ausgebildeten Nachläufern 14a, 14b, 14c ein sehr variables Hubbalkensystem erreicht, das sich einfach, ohne Umbaumaßnahmen in bestehende Förderstrassen integrieren lässt und unter Last- sowie Kostenaspekten jederzeit eine optimale Kombination von Hubbalken und Nachläufern in Abhängigkeit von Coilgewicht und Coilanzahl bzw. der zu erfüllenden Transportaufgabe ermöglicht.

### Bezugszeichenliste:

- 1: Hubbalkenförderer/Basishubbalken
- 2: Blechbund/Coil bzw. Transportgut
- 3: Fahrschemel
- 4: Fahrschemel
- 5: Achse
- 6: Laufrad
- 7: Hubvorrichtung / Vertikalhub
- 8: Balken
- 9: Hubzylinder / Vertikalhub
- 10: Auflager
- 11: Gestänge / Kopplungsgestänge
- 12a: Hubbalken
- 12b: Hubbalken
- 12c: Hubbalken
- 13: Gelenklager/Gelenk
- 14a: Transportelement/Nachläufer
- 14b: Transportelement/Nachläufer
- 14c: Transportelement/Nachläufer
- 15: Fahrschemel (Radsatz)
- 16: Achse
- 17: Laufrad
- 18: Hubvorrichtung / Vertikalhub
- 19: Balken
- 20: Hubzylinder / Vertikalhub
- 21: Auflager
- 22: Schub-/Zugstange / Koppelstange

## Patentansprüche

1. Hubbalkenförderer (1) zum taktweisen Transport von Band- bzw. Blechbunden, Blechpaketen oder dergleichen Transportgut (2), umfassend einen mittels Hubvorrichtungen (7; 9) heb- und senkbaren sowie mittels zumindest eines Fahrantriebes in Transportrichtung schienengeführt verfahrbaren, zwei Radsätze bzw. Fahrschemel (3, 4) aufweisenden Hubbalken (1; 12a, 12b, 12c), wobei der Hubbalken mit einem folgenden Hubbalkenförderer (1) gekuppelt ist,
**dadurch gekennzeichnet,**
**dass** der Hubbalken (1; 12a, 12b, 12c) gelenkig mit einem lediglich einen Fahrschemel (15) aufweisenden Transportelement (14a, 14b, 14c) verbunden ist, wobei das Gelenk (13) als Kopplungsglied sowohl die Vertikal- und Horizontalkräfte als auch die Horizontalbewegung des Hubbalkens (1; 12a, 12b, 12c) auf das Transportelement überträgt.

2. Hubbalken nach Anspruch 1,
**dadurch gekennzeichnet,**
**dass** das Transportelement als Nachläufer (14a, 14b, 14c) mit mindestens einer Hubvorrichtung (18, 20) ausgebildet ist.

3. Hubbalken nach den Ansprüchen 1 oder 2,
**dadurch gekennzeichnet,**
**dass** das Gelenk (13)zwischen Hubbalken (12a, 12b, 12c) und Nachläufer (14a, 14b, 14c) als ein Horizontal- und Vertikalkräfte übertragendes Gelenklager ausgebildet ist.
